# EUROPÄISCHE PATENTANMELDUNG

(11) **EP 2 166 352 A1**
(43) Veröffentlichungstag der Anmeldung: **24.03.2010**
(21) Anmeldenummer: 08016360.3
(22) Anmeldetag: 17.09.2008
(51) Int. Cl.: G01N 33/483, G01N 33/487

(54) **Vorrichtung und Verfahren zum Bestimmen eines Analyten in einer Flüssigkeitsprobe**

(71) Anmelder: F.HOFFMANN-LA ROCHE AG, 4070 Basel (CH); Roche Diagnostics GmbH, 68305 Mannheim (DE)
(72) Erfinder: JABS, Holger, 69517 Gorxheimertal (DE); LADIGES, Dr Norbert, 68782 Brühl (DE); FINK, Dr Herbert, 68259 Mannheim (DE)
(74) Vertreter: Bittner, Thomas L.

(57) **Zusammenfassung**

Die Erfindung betrifft eine Vorrichtung zum Bestimmen eines Analyten in einer Flüssigkeitsprobe, insbesondere in einer Körperflüssigkeitsprobe, mit einer Analyseeinrichtung, die konfiguriert ist, eine Flüssigkeitsprobe nach dem Aufgeben auf einen Analysebereich eines für eine Analyse der Flüssigkeitsprobe hergerichteten Testelementes zu analysieren, und einer Hydrophilisierungseinrichtung, die konfiguriert ist, eine Oberfläche im Analysebereich (4) für die Herrichtung des Testelementes zu hydrophilisieren. Weiterhin betrifft die Erfindung ein Verfahren zum Bestimmen eines Analyten in einer Flüssigkeitsprobe.

## Beschreibung

Die Erfindung bezieht sich auf eine Vorrichtung und ein Verfahren zum Bestimmen eines Analyten in einer Flüssigkeitsprobe, insbesondere einer Körperflüssigkeitsprobe.

### Hintergrund der Erfindung

Derartige Vorrichtungen und Verfahren werden zum Beispiel eingesetzt, um einen oder mehrere Analyten in Körperflüssigkeitsproben zu bestimmen, insbesondere in Blutproben. Vorrichtungen sind insbesondere in Form stationärer oder tragbarer Analysegeräte, also Labor- oder Handgeräte bekannt. Zum Bestimmen des Analyten in der Köperflüssigkeitsprobe werden im Anwendungsbereich der so genannten Patiententests sowie im Bereich der Versorgung und der Betreuung von Diabetespatienten häufig Einweg-Testelemente verwendet, zum Beispiel in der Ausbildung als Teststreifen. Diese Testelemente sind für die Bestimmung des oder der Analyten in der Körperflüssigkeit oder einer anderen Flüssigkeitsprobe hergerichtet, was insbesondere die Ausbildung eines geeigneten Analyseberciches betrifft. Zum Bestimmen des oder der Analyten in der Flüssigkeitsprobe wird diese auf den Analysebereich des Testelementes aufgegeben, wo üblicherweise eine oder mehrere Nachwcisrcaktionen stattfinden. Anschließend wird das Testelement mit Hilfe eines Test- oder Analysegerätes, bei dem es sich insbesondere um ein Handgerät handeln kann, ausgewertet. Die Auswertung des Testelementes erfolgt zum Beispiel mit Hilfe optischer oder elektronische Messverfahren.

Für eine optimale Funktion der Bestimmung des Analyten in der Flüssigkeit ist es häufig notwendig, dass eine Oberfläche im Analysebereich des Testelementes hydrophil beschaffen ist, so dass das flüssige Probcnmaterial leicht verläuft. Zur Ausbildung einer hydrophilen Oberfläche kann eine Beschichtung im Analysebereich vorgesehen sein. In diesem Zusammenhang schränkt die Notwendigkeit, hydrophile Materialien verwenden zu müssen, die Auswahl von geeigneten Materialien stark ein. Deshalb sind andere Materialeigenschaften, die gleichfalls Einfluss auf die Funktionalität des Testelementes haben, häufig nicht optimal ausgeprägt. Funktionelle Beschichtungen müssen sehr spezifisch ausgewählt werden und sind Gegenstand umfangreicher Entwicklungstätigkeit. Dieses erfordert einen hohen Zeit- und Kostenaufwand. Darüber hinaus sind das Anwenden der Beschichtung und die Prozesskontrolle bei der Herstellung aufwendig. Zwar kann mit der Beschichtung eine hydrophile Oberfläche im Analysebereich des Testelementes bereitgestellt werden, häufig sind hierdurch jedoch die Haltbarkeit und die mechanische Belastbarkeit der Testelemente eingeschränkt.

### Zusammenfassung der Erfindung

Aufgabe der Erfindung ist es, eine Vorrichtung und ein Verfahren zum Bestimmen eines Analyten in einer Flüssigkeitsprobe anzugeben, bei denen das Bereitstellen einer hydrophilen Oberfläche auf einem zur Bestimmung der Flüssigkeiten genutzten Testelement auf einfache und zuverlässige Weise ermöglicht ist.

Diese Aufgabe wird erfindungsgemäß durch eine Vorrichtung zum Bestimmen eines Analyten in einer Flüssigkeitsprobe nach dem unabhängigen Anspruch 1 sowie ein Verfahren zum Bestimmen eines Analyten in einer Flüssigkeitsprobe nach dem unabhängigen Anspruch 8 gelöst. Vorteilhafte Ausgestaltungen der Erfindung sind Gegenstand von abhängigen Unteransprüchen.

Die Erfindung umfasst den Gedanken einer Vorrichtung zum Bestimmen eines Analyten in einer Flüssigkeitsprobe, insbesondere in einer Körperflüssigkeitsprobe, mit einer Analyseeinrichtung, die konfiguriert ist, eine Flüssigkeitsprobe nach dem Aufgeben auf einen Analysebereich eines für eine Analyse der Flüssigkeitsprobe hergerichteten Testelementes zu analysieren, und einer Hydrophilisierungseinrichtung, die konfiguriert ist, eine Oberfläche im Analysebereich für die Herrichtung des Testelementes zu hydrophilisieren.

Weiterhin umfasst die Erfindung den Gedanken eines Verfahrens zum Bestimmen eines Analyten in einer Flüssigkeitsprobe, insbesondere in einer Körperflüssigkeitsprobe, mit Hilfe eines Analysegerätes, wobei das Verfahren die folgenden Schritte umfasst: Bereitstellen einer Flüssigkeitsprobe, Aufgeben der Flüssigkeitsprobe auf einen Analysebereich eines für eine Analyse der Flüssigkeitsprobe hergerichteten Testelementes und Analysieren der Flüssigkeitsprobe mittels einer von dem Analysegerät umfassten Analyseeinrichtung, wobei eine Oberfläche im Analysebereich vor dem Aufgeben der Flüssigkeitsprobe mittels einer Hydrophilisierungseinrichtung hydrophilisiert wird.

Mit der Erfindung ist die Möglichkeit geschaffen, das Hydrophilisieren der Oberfläche im Analysebereich des zum Bestimmen des Analyten in der Flüssigkeitsprobe genutzten Testelementes ohne die aus dem Stand der Technik bekannte Beschichtung auf zuverlässige Art und Weise zu erreichen. Bei der Herstellung des Testelementes kann auf die zur Ausbildung einer hydrophilen Oberfläche im Stand der Technik genutzte Beschichtung verzichtet werden, so dass bezüglich der Ausbildung anderer funktioneller Eigenschaften des Testelementes keine Einschränkungen bestehen, die sich aufgrund der Auswahl eines geeigneten Beschichtungsmatcrials ergeben können. Die Hydrophilisierung erfolgt bevorzugt unmittelbar im Zusammenhang mit dem Herrichten des Testelementes für die Bestimmung der Flüssigkeitsprobe, bei der es sich beispielsweise um eine Körperflüssigkeitsprobe handelt, bevorzugt um eine Blutprobe. Die Vorrichtung zum Bestimmen der Flüssigkeitsprobe kann in ein Handgerät oder ein stationäres Gerät, zum Beispiel ein Laborgerät, integriert sein, beispielsweise ein Blutanalysegerät in stationärer oder tragbarer Ausführung.

Dem Benutzer ist die Möglichkeit an die Hand gegeben, eine hydrophile Oberfläche im Analyscbereich des Testelementes, bei dem es sich beispielsweise um einen Teststreifen handelt, bevorzugt in Einweg-Ausprägung, quasi vor Ort herzustellen, wenn tatsächlich eine Analyse oder Messung stattfinden soll. Der Herstellungsprozess für Testelemente vereinfacht sich insgesamt, da die im Stand der Technik vorgesehene Beschichtung zum Ausbilden einer hydrophilen Oberfläche nicht notwendig ist.

Eine bevorzugte Weiterbildung der Erfindung sicht vor, dass die Hydrophilisierungseinrichtung eine Plasmabehandlungseinrichtung umfasst, die konfiguriert ist, die Oberfläche im Analysebereich beim Hydrophilieren mit einem Plasma zu behandeln. Es ist als solches in verschiedenen Ausprägungen bekannt, Oberflächen mit einem Plasma zu behandeln, um diese zu hydrophilisieren. Als Plasma wird üblicherweise ein (teilweise) ionisiertes Gas bezeichnet, das zu einem nennenswerten Anteil freie Ladungsträger wie lonen oder Elektronen enthält. Ein Plasma wird mittels äußerer Energiezufuhr erhalten. Bleibt die Energieeinkopplung aus, so verlischt das Plasma, das heißt die positiven und die negativen Ladungsträger rekombinieren zu neutralen Atomen, Molekülen oder Radikalen. Ferner können die Ladungsträger durch ambipolare Diffusion zum Beispiel an elektrisch leitenden Wänden oder ins Vakuum des Weltalls verloren gehen. Hinzu kommen (Wärme-)Strahlungsverluste des Plasmas. Um den permanenten Verlust ionisierter Teilchen zu kompensieren, müssen diese immer wieder neu erzeugt werden, was beispielsweise mittels Beschleunigung und Stoßionisation geschieht. Ein Plasma kann auf verschiedene Arten mittels Energiezufuhr erzeugt werden. Hierzu gehören insbesondere: thermische Anregung, chemische und nukleare Reaktionen, Strahlungsanregungen, Anregung durch Laserstrahlung, Anregungen durch elektrostatische Felder, Anregung durch Gleichspannung, Anregungen durch elektromagnetische Felder, kapazitive elektrische Anregung, Drahtcxplosion, induktive (magnetische) Anregung, Anregung durch Mikrowellenstrahlung und mittels Pincheffekt. Plasmabchandlungseinrichtungen, die eine oder mehrere Arten der Energiezufuhr nutzen, stehen in verschiedenen Ausführungsformen als solche zur Verfügung, insbesondere auch in miniaturisierter Bauform.

In einer Ausgestaltung kann die Plasmabchandlung mit einem Gasgemisch ausgeführt werden, welches wahlweise einen oder mehrere oxidierende Stoffe enthält, zum Beispiel Ozon.

Bei einer zweckmäßigen Ausgestaltung der Erfindung kann vorgesehen sein, dass die Plasmabehandlungscinrichtung eine Mikrowellen-Plasmacrzcugungseinrichtung aufweist. Es wird die Mikrowellen-Plasmacrzeugung genutzt, zum Beispiel im 2,45 GHz-ISM-Band. Die Niederdruck-Plasmatechnik ermöglicht eine effiziente Ausbildung hydrophiler Oberflächen mit guter Qualität.

Eine vorteilhafte Ausführungsform der Erfindung sieht vor, dass die Plasmabchandlungscinrichtung einen Mikroplasmareaktor aufweist. Mikroplasmarcaktoren sind als solche in verschiedenen Ausgestaltungen bekannt. Beispielsweise verfügt ein solcher Mikroplasmareaktor über einen Kern, der aus mikrostrukturierten Elektroden besteht, die ihrerseits kammförmig ineinander greifen. Die mikrotechnische Fertigung des Reaktors in seinen unterschiedlichen Ausbildungen erfolgt zum Beispiel mit Verfahren der Photolitogaphie. Besonders geringe Spaltweiten ermöglichen es, bei geringen Zündspannungen ein homogenes Plasma zu erzeugen. In diesem Zusammenhang kann es vorgesehen sein, mehrere Mikroreaktoren zu Parallelisieren.

Bei einer bevorzugten Weiterbildung der Erfindung ist vorgesehen, dass die Hydrophilisicrungseinrichtung eine zum Hydrophilisieren der Oberfläche im Analysebereich konfigurierte Oberflächenbehandlungseinrichtung ausgewählt aus der folgenden Gruppe von Oberflächenbehandlungseinrichtungen umfasst: Ultraschallbehandlungseinrichtung, Coronabehandlungseinrichtung, Luft-Ionisator, Ozonisator und Mikrowellenbehandlungscinrichtung. Mittels Auswahl einer geeigneten Behandlungseinrichtung zum Hydrophilisieren der Oberfläche im Analysebereich kann die Vorrichtung an unterschiedliche Anwendungscrfordernisse angepasst werden. Auch die Nutzung mehrerer Behandlungseinrichtungen in der Vorrichtung kann vorgesehen sein, beispielsweise zur Optimierung der Hydrophilisierung.

Bevorzugt sieht eine Fortbildung der Erfindung vor, dass die Hydrophilierungseinrichtung eine Mikrohydrophilisierungseinrichtung ist.

Bei einer vorteilhaften Ausgestaltung der Erfindung kann vorgesehen sein, dass die Analyseeinrichtung und die Hydrophilisierungseinrichtung als integrierte Komponenten eines Analysegerätes gebildet sind. Die Analyseeinrichtung und die Hydrophilisierungseinrichtung können bevorzugt in ein gemeinsames Gehäuse integriert sein.

In Verbindung mit den vorteilhaften Ausgestaltungen des Verfahrens zum Bestimmen eines Analyten in der Flüssigkeitsprobe bestehen die im Zusammenhang mit zugehörigen zweekmäßigen Fortbildungen der Vorrichtung zum Bestimmen des Analyten in der Flüssigkeitsprobe genannten Ausführungen entsprechend.

### Beschreibung bevorzugter Ausführungsbeispiele der Erfindung

Die Erfindung wird im Folgenden anhand von Ausführungsbeispielen unter Bezugnahme auf eine Figur näher erläutert.

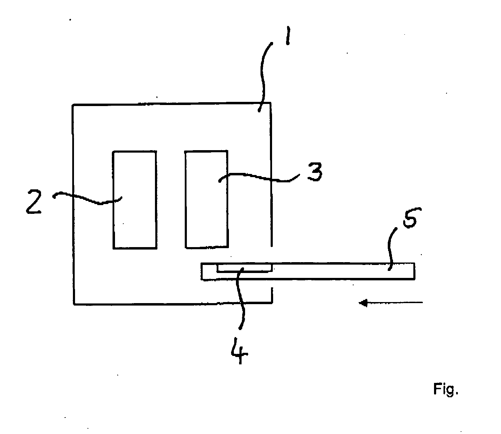

Die einzige Figur zeigt eine schematische Darstellung eines Analysegeräts 1 mit einer Analyseeinrichtung 2 und einer Hydrophilisierungseinrichtung 3. Die Analyeeinrichtung 2 ist konfiguriert, mit Hilfe einer je nach Anwendung ausgewählten Mcss- oder Analystechnik eine Probe einer zu bestimmenden Flüssigkeit, die auf einen Analysebereich 4 eines Testelementes 5 aufgebracht ist, zu analysieren. Beispielsweise ist die Analyseeinrichtung 2 mit einer optischen Messeinrichtung gebildet, mit der Messlicht auf den Analysebereich 4 eingestrahlt werden kann. Hiervon ausgehend können dann zum Beispiel Fluoreszenz- und / oder Absorptionseigenschaften der zu bestimmenden Flüssigkcit ausgewertet werden. Je nach Anwendungsfall kann die Analyseeinrichtung 2 ein oder mehrere unterschiedliche Messprinzipien nutzen, um die Flüssigkeitsprobe zu bestimmen.

Um insbesondere ein gutes Verlaufen der Flüssigkeitsprobe im Analysebereich 4 zu gewährleisten, wird die Oberfläche des Analysebereichs 4 hydrophilisiert. Zu diesem Zweck ist die Hydrophilisierungseinrichtung 3 vorgesehen. Die Hydrophilisierungseinrichtung 3 verfügt über eine Plasmabchandlungseinrichtung, mit der ein Plasma erzeugt wird, welches seinerscits dann genutzt wird, um die Oberfläche im Analysebereich 4 mit dem Plasma zu behandeln, so dass die Oberfläche hydrophilisiert wird. Dieses geschieht in der dargestellten Ausführungsform nach dem Einbringen des Testelementes 5 in das Analysegerät 1.

Baukomponenten zum Erzeugen eines Plasmas stehen als solche in verschiedenen Ausführungsformen zur Verfügung, insbesondere auch als Mikrosysteme oder miniaturisierte Bauelemente. Beispielhaft zu nennen sind Mikrowellen-Plasmaerzeugungseinrichtungen, die die Mikrowellentechnologie zum Erzeugen des Plasmas nutzen, sowie Mikroplasmareaktoren, die auf dem Gebiet der Mikrosystemtechnik bekannt sind. Aber auch andere Bauformen für Plasmaerzeugungseinrichtungen können je nach Anwendungsfall eingesetzt werden.

In anderen Ausführungsformen umfasst die Hydrophilisierungseinrichtung 3 wenigstens eine zum Hydrophilisieren der Oberfläche im Analysebereich konfigurierte Oberflächenbehandlungseinrichtung ausgewählt aus der folgenden Gruppe von Oberflächenbehandlungseinrichtungen: Ultraschallbehandlungseinrichtung, Coronabehandlungseinrichtung, Luft-Ionisator. Ozonisator und Mikrowellenbehandlungseinrichtung. Eine oder mehrere dieser Oberflächenbehandlungseinrichtungen, die als solche in verschiedenen Ausgestaltungen zur Verfügung stehen, insbesondere auch in miniaturisierter Bauweise, können in der Analyseeinrichtung 2 auch wahlweise mit der Plasmaerzeugungseinrichtung kombiniert werden.

Bevorzugt erfolgt eine gerätetechnische Integration der Plasmabehandlungseinrichtung in das Analysegerät 1, wie dieses in der dargestellten Ausführungsform gezeigt ist.

## Patentansprüche

1. Vorrichtung zum Bestimmen eines Analyten in einer Flüssigkeitsprobe, insbesondere in einer Körperflüssigkeitsprobe, mit einer Analyseeinrichtung (2), die konfiguriert ist, eine Flüssigkeitsprobe nach dem Aufgeben auf einen Analysebereich (4) eines für eine Analyse der Flüssigkeitsprobe hergerichteten Testelementes (5) zu analysieren, und einer Hydrophilisierungseinrichtung (3), die konfiguriert ist, eine Oberfläche im Analysebereich (4) für die Herrichtung des Testelementes (5) zu hydrophilisieren.

2. Vorrichtung nach Anspruch 1, **dadurch gekennzeichnet, dass** die Hydrophilisierungseinrichtung (3) eine Plasmabehandlungseinrichtung umfasst, die konfiguriert ist, die Oberfläche im Analysebereich (4) beim Hydrophilisieren mit einem Plasma zu behandeln.

3. Vorrichtung nach Anspruch 1, **dadurch gekennzeichnet, dass** die Plasmabehandlungseinrichtung eine Mikrowellen-Plasmaerzeugungseinrichtung aufweist.

4. Vorrichtung nach Anspruch 1 oder 2, **dadurch gekennzeichnet, dass** die Plasmabehandlungseinrichtung einen Mikroplasmareakor aufweist.

5. Vorrichtung nach mindestens einem der vorangehenden Ansprüche, **dadurch gekennzeichnet, dass** die Hydrophilisierungseinrichtung (3) eine zum Hydrophilisieren der Oberfläche im Analysebereich (4) konfigurierte Oberflächenbehandlungseinrichtung ausgewählt aus der folgenden Gruppe von Oberflächenbehandlungseinrichtungen umfasst: Ultraschallbehandlungseinrichtung, Coronabehandlungseinrichtung, Luft-Ionisator, Ozonisator und Mikrowellenbchandlungseinriehtung.

6. Vorrichtung nach mindestens einem der vorangehenden Anspruche, **dadurch gekennzeichnet, dass** die Hydrophilisierungseinrichtung (3) eine Mikrohydrophilisierungseinrichtung ist.

7. Vorrichtung nach mindestens einem der vorangehenden Ansprüche, **dadurch gekennzeichnet, dass** die Analyseeinrichtung (2) und die Hydrophilisierungseinrichtung (3) als integrierte Komponenten eines Analysegerätes (1) gebildet sind.

8. Verfahren zum Bestimmen eines Analyten in einer Flüssigkeitsprobe, insbesondere in einer Körperflüssigkeitsprobe, mit Hilfe eines Analysegerätes (1), wobei das Verfahren die folgenden Schritte umfasst:
- Bereitstellen einer Flüssigkeitsprobe,
- Aufgeben der Flüssigkeitsprobe auf einen Analysebereich (4) eines für eine Analyse der Flüssigkeitsprobe hergerichteten Testelementes (5) und
- Analysieren der Flüssigkeitsprobe mittels einer von dem Analysegerät (1) umfassten Analyseeinrichtung (2),
wobei eine Oberfläche im Analysebereich (4) vor dem Aufgeben der Flüssigkeitsprobe mittels einer Hydrophilierungseinrichtung (3) hydrophilisiert wird.

9. Verfahren nach Anspruch 8, **dadurch gekennzeichnet, dass** die Oberfläche im Analysebereich (4) hydrophilisiert wird, indem die Oberfläche mittels einer von der Hydrophilierungseinrichtung (3) umfassten Plasmabehandlungseinrichtung mit einem Plasma behandelt wird.

10. Verfahren nach Anspruch 8 oder 9, **dadurch gekennzeichnet, dass** die Oberfläche im Analysebereich (4) nach dem Einführen des Testelementes (5) in dem Analysegerät (1) hydrophilisiert wird.

11. Verfahren nach mindestens einem der Ansprüche 8 bis 10, **dadurch gekennzeichnet, dass** die Oberfläche im Analysebereich (4) mit einem von einer Mikrowelle-Plasmaerzeugungseinrichtung bereitgestellten Plasma behandelt wird.

12. Verfahren nach mindestens einem der Ansprüche 8 bis 11, **dadurch gekennzeichnet, dass** die Oberfläche im Analysebereich (4) mit einem von einem Mikroplasmareaktor bereitgestellten Plasma behandelt wird.

13. Verfahren nach mindestens einem der Ansprüche 8 bis 12, **dadurch gekennzeichnet, dass** die Oberfläche im Analysebereich hydrophilisiert wird, indem die Oberfläche mittels einer von der Hydrophilierungseinriehtung (3) umfassten Oberflächenbehandlungseinrichtung ausgewählt aus der folgenden Gruppe von Oherflächenbehandlungseinrichtungen behandelt wird: Ultraschallbehandlungseinrichtung, Coronabehandlungseinrichtung, Luft-Ionisator, Ozonisator und Mikrowellenbehandlungseinrichtung.

14. Verfahren nach mindestens einem der Ansprüche 8 bis 13, **dadurch gekennzeichnest, dass** eine Blutprobe bestimmt wird, indem die Blutprobe auf den Analysebereich (4) aufgegeben und analysiert wird.
